# FASCICULE DE BREVET EUROPEEN

(11) **EP 0 893 344 B1**
(45) Date de publication et mention de la délivrance du brevet: **11.12.2002**
(21) Numéro de dépôt: 98401889.5
(22) Date de dépôt: 24.07.1998
(51) Int. Cl.: B64G 1/42, B64G 1/26

(54) **Système propulsif monolithique compact à monergol pour petit satellite**
Kompaktes, monolithisches Monergolantriebssystem für kleinen Satelliten
Compact monolithic propulsion system using monergol for small satellite

(30) Priorité: 25.07.1997 FR 9709488
(43) Date de publication de la demande: 27.01.1999
(73) Titulaire: SOCIETE NATIONALE D'ETUDE ET DE CONSTRUCTION DE MOTEURS D'AVIATION, 75015 Paris (FR)
(72) Inventeur: Dethienne, Nathalie, 77000 Livry-Sur-Seine (FR); Pages, Xavier, 77190 Dammarie-Les-Lys (FR)
(74) Mandataire: Thévenet, Jean-Bruno

(56) Documents cités:
- FR-A- 2 283 390
- US-A- 3 072 363
- US-A- 3 254 486
- US-A- 3 471 106
- DETHIENNE ET AL.: "DESIGN AND DEVELOPMENT OF PROPULSION SUBSYSTEM FOR SMALL SATELLITE APPLICATIONS" SECOND EUROPEAN SPACECRAFT PROPULSION CONFERENCE, 27 - 29 mai 1997, pages 77-84, XP002065129 NOORDWIJK, THE NETHERLANDS

## Description

### Domaine de l'invention.

La présente invention a pour objet un système propulsif monolithique compact à monergol pour petit satellite et devant subir occasionnellement des corrections d'orbite.

### Art antérieur.

On connaît divers types de systèmes propulsifs associés à des satellites pour assurer leur mise à poste initiale et procéder à des corrections d'orbite.

Les systèmes propulsifs pour petits satellites mettant en oeuvre des propulseurs à ergol liquide comprennent un ou plusieurs réservoirs reliés par des tuyauteries soudées ou vissées aux propulseurs et autres équipements, tels que des vannes de barrage, capteurs, vannes de remplissage/vidange, filtres etc.

De telles réalisations sont complexes et impliquent une longue durée d'assemblage et d'intégration et un coût important.

Dans une conférence intitulée "Design and Development of propulsion subsystem for small satellite applications" et présentée par Nathalie DETHIENNE et Nicolas CORNU lors de la "Second European Spacecraft Propulsion Conference" qui s'est tenue à Noordwijk, Pays-Bas, du 27 au 29 Mai 1997, il a été proposé un système propulsif pour petit satellite, dans lequel des propulseurs, ainsi que des éléments annexes tels que des vannes de remplissage/vidange, sont montés individuellement sur une structure cylindro-conique qui est elle-même rapportée autour du réservoir d'ergol et fixée sur celui-ci. Une telle réalisation n'évite pas l'utilisation de diverses tuyauteries de liaison entre les propulseurs et l'orifice de sortie du réservoir et implique la mise en oeuvre d'une structure cylindro-conique qui doit coiffer une partie substantielle du réservoir, ce qui implique un montage qui reste relativement complexe et coûteux.

### Objet et description succincte de l'invention.

L'invention a pour but de remédier aux inconvénients des systèmes propulsifs existants et notamment de réduire les coûts d'assemblage et d'intégration, ainsi que la durée de ces opérations, et de permettre la réalisation d'un système propulsif indépendant compact entièrement assemblé avant intégration sur la plate-forme du satellite, de sorte que le nombre d'interfaces entre la plate-forme du satellite et le système propulsif peut être fortement réduit.

Ces buts sont atteints, conformément à l'invention, grâce à un système propulsif monolithique compact à monergol pour petit satellite, caractérisé en ce qu'il comprend :
a) un réservoir d'ergol liquide équipé de moyens de fixation sur la plate-forme du satellite, et comportant un fond renforcé,
b) un bloc de distribution soudé sur le fond renforcé du réservoir qui incorpore un élément filtrant,
c) au moins une vanne de remplissage/vidange montée sur le bloc de distribution, et
d) un ensemble d'au moins deux propulseurs montés sur le bloc de distribution, orientés sensiblement selon l'axe du réservoir correspondant lui-même à l'axe du satellite et alimentés directement à partir du bloc de distribution sans tuyauterie supplémentaire.

Le système propulsif peut comprendre une vanne unique servant à remplir et vidanger le réservoir en ergol ou fluide de nettoyage, de test ou de pressurisation.

Selon un autre mode de réalisation possible, le système propulsif comprend une première vanne de remplissage/vidange montée sur le bloc de distribution et servant à remplir et vidanger le réservoir en ergol et une deuxième vanne de remplissage/vidange montée sur le bloc de distribution et servant à remplir et vidanger le réservoir en gaz, la deuxième vanne de remplissage/vidange étant reliée à travers le bloc de distribution à une tuyauterie interne au réservoir et remontant jusqu'à l'extrémité du réservoir opposée à la sortie voisine du bloc de distribution.

Chaque propulseur est avantageusement constitué d'un moteur fixé par une bride à un corps de vanne lui-même fixé sur le bloc de distribution.

Selon une réalisation particulière, le système propulsif comprend quatre propulseurs disposés en croix symétriquement par rapport à l'axe du réservoir.

Conformément à un mode particulier de réalisation, le bloc de distribution comprend une première partie fixée au fond du réservoir pour recevoir les propulseurs et une deuxième partie située sous la première partie pour recevoir des équipements annexes tels qu'une vanne de remplissage/vidange ou un capteur de pression.

Les propulseurs sont avantageusement coudés à 90° de manière à réduire à la fois la hauteur globale et la hauteur sous les moyens de fixation du réservoir du système propulsif.

Selon un autre mode particulier de réalisation, le bloc de distribution comprend une plaque support à la partie inférieure de laquelle sont montés les propulseurs.

Dans ce cas, des équipements annexes tels qu'une vanne de remplissage/vidange ou un capteur de pression peuvent être disposés radialement à la périphérie de la plaque support du bloc de distribution ou sous la plaque comme les propulseurs.

### Brève description des dessins.

D'autres caractéristiques et avantages de l'invention ressortiront de la description suivante de modes particuliers de réalisation donnés à titre d'exemples, en référence aux dessins annexés sur lesquels :
- la figure 1 est une vue en perspective d'un système propulsif conformément à un premier mode de réalisation de l'invention,
- la figure 2 est une vue schématique avec arrachement montrant une mise en oeuvre possible du système propulsif selon l'invention sur un petit satellite,
- la figure 3 est une vue de dessous du système propulsif de la figure 1,
- la figure 4 est une vue en élévation du système propulsif de la figure 1,
- la figure 5 est une vue en coupe axiale montrant des détails de réalisation d'un réservoir et d'un bloc de distribution associés à une vanne de remplissage/vidange unique,
- la figure 6 est une vue en coupe axiale montrant des détails de réalisation d'un réservoir et d'un bloc de distribution associés à deux vannes de remplissage/vidange, et
- les figures 7 et 8 sont des vues respectivement en élévation et de dessous d'un système propulsif conformément à un deuxième mode de réalisation de l'invention.

### Description détaillée de modes particuliers de réalisation.

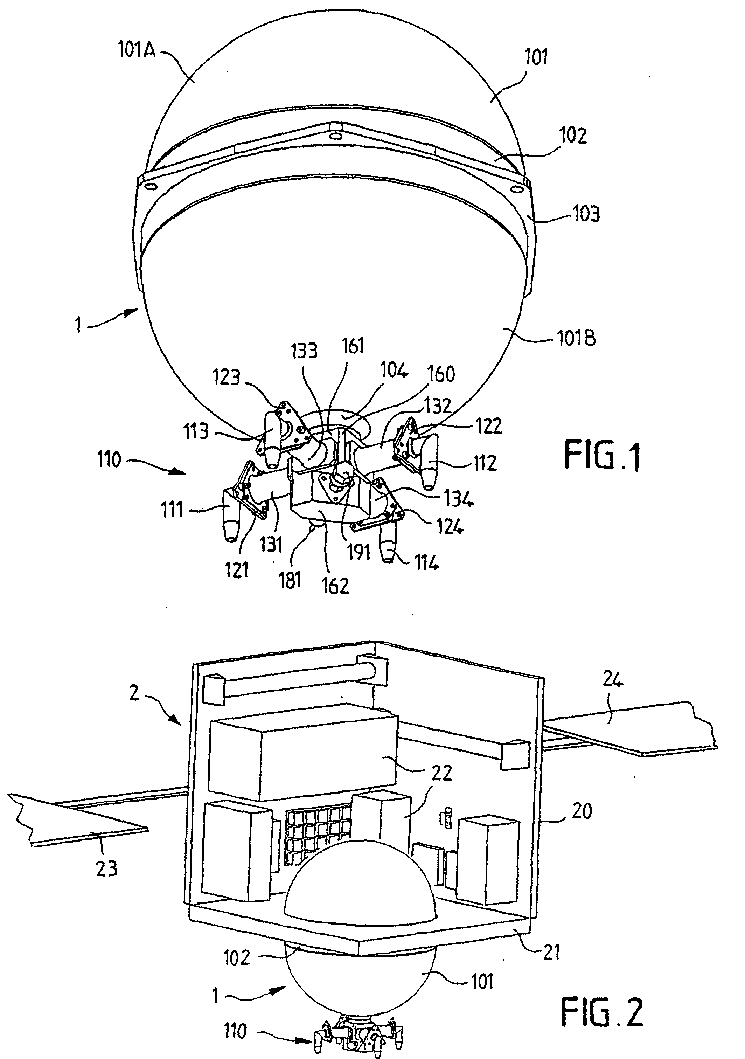

On a représenté sur la figure 1 un premier exemple de système propulsif monolithique compact à monergol destiné à équiper un petit satellite 2 tel que celui représenté schématiquement sur la figure 2.

Le système propulsif selon l'invention est destiné à la mise à poste initiale et aux corrections d'orbite de petits satellites stabilisés selon trois axes. L'invention s'applique en particulier à des satellites présentant une massé de l'ordre de 200 à 1000 kg. Le système propulsif selon l'invention peut ainsi équiper des petits satellites généralement destinés à être situés sur des orbites basses. Le système propulsif est utilisé essentiellement pour la mise à poste initiale ou des contrôles d'altitude subséquents tandis que d'autres manoeuvres telles que des corrections d'attitude du satellite sont réalisées grâce à des roues à inertie. Le système propulsif est constitué de propulseurs dont la poussée est orientée essentiellement selon l'axe du satellite 2, qui correspond également à l'axe du réservoir 101.

Sur la figure 1, on voit que le système propulsif comprend essentiellement un réservoir 101, qui est avantageusement réalisé entièrement en titane et comprend deux hémisphères 101 A, 101 B rattachés à une virole cylindrique 102 sur laquelle sont montés des moyens 103 de fixation équatoriale du réservoir à une plate-forme 21 (figure 2) d'un satellite 2 comprenant essentiellement un module central 20 abritant les divers éléments fonctionnels 22 du satellite, et des panneaux solaires 23, 24. La forme du satellite 2 peut naturellement être différente de celle représentée schématiquement sur la figure 2, et peut comprendre divers équipements non représentés, tels que par exemple des roues à inertie.

Le réservoir 101 présente un fond 104 renforcé sur lequel est soudé un bloc de distribution 160, qui est également avantageusement réalisé en titane. Le titane est en particulier compatible avec un ergol tel que l'hydrazine.

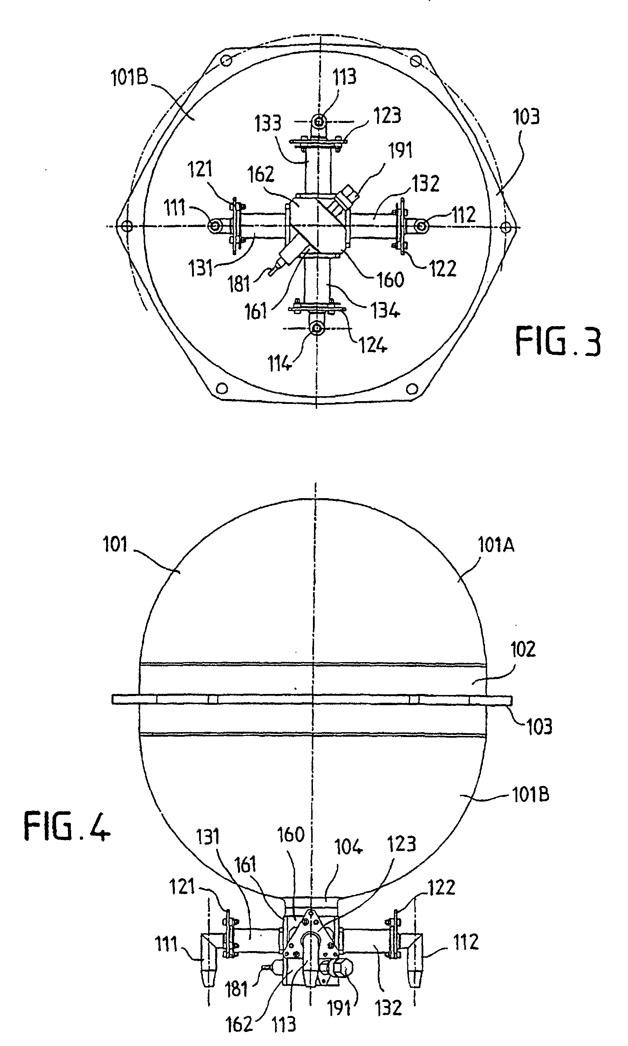

Un ensemble 110 de propulseurs 111 à 114 est rapporté directement sur le bloc de distribution 160 et sera décrit plus loin en référence aux figures 1, 3 et 4.

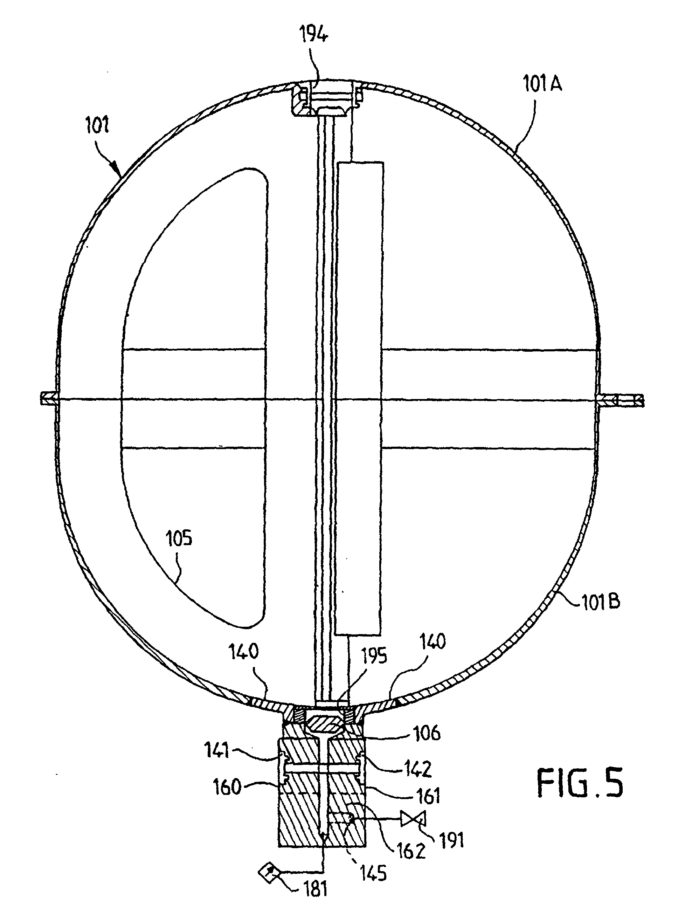

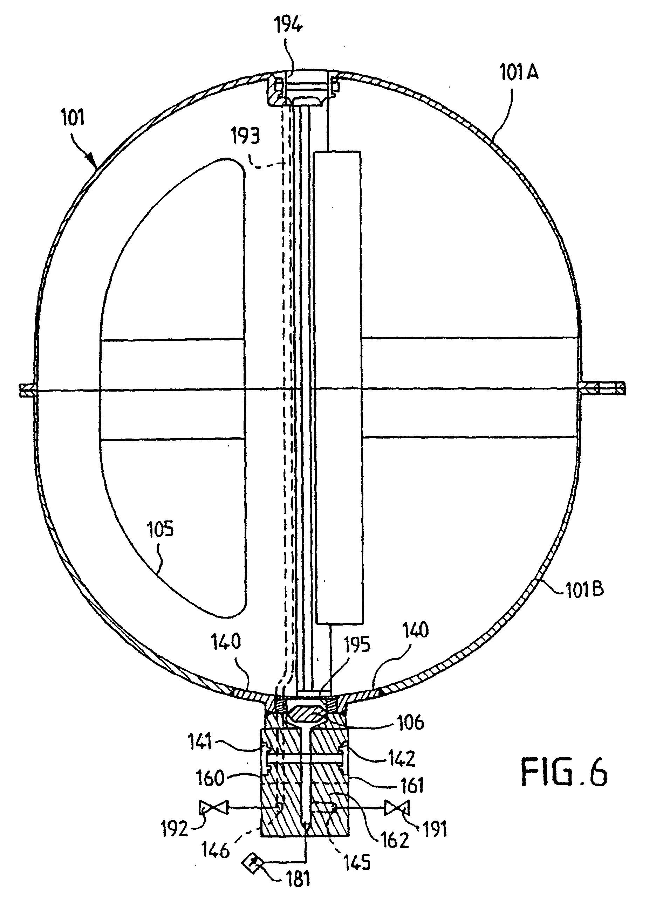

Le réservoir 101 peut être réalisé de manières très diverses. A titre d'exemple, on a représenté sur les figures 5 et 6 un réservoir à tension superficielle de 40 dm3 contenant de l'hydrazine pressurisée à l'hélium et fonctionnant avec une pression qui diminue de 22 à 5,5 bar avec une augmentation du volume de gaz au fur et à mesure de l'utilisation d'ergol (vidange fonctionnant selon le mode "blow down"). On voit sur les figures 5 et 6 un dispositif d'expulsion de liquide 105, à lames qui permet de garantir un déplacement de l'ergol vers la sortie 195 du réservoir, par tension superficielle, quelle que soit la position de l'ergol dans le réservoir. Les lames du dispositif d'expulsion de liquide 105 relient l'entrée 194 et la sortie 195 du réservoir. Un filtre 106 est intégré à la sortie 195 du réservoir 101 et forme une barrière étanche au gaz de pressurisation.

Le fond renforcé 104 du réservoir peut comprendre une surépaisseur 140 (figures 5 et 6) au voisinage de la sortie 195 du réservoir afin de supporter mécaniquement la liaison par soudage du bloc de distribution 160 qui est réalisé de façon massive et comporte des canaux internes de liaison entre la sortie 195 du réservoir 101 équipé du filtre 106 et des orifices tels que 141,142 d'alimentation de propulseurs tels que 111, 112 et un orifice 145 d'alimentation d'une vanne 191 de remplissage/vidange.

Dans le cas où une seule vanne de remplissage/vidange 191 est prévue, celle-ci sert à remplir et vidanger le réservoir avec l'ergol ou tout autre fluide de test ou de nettoyage et à pressuriser et dépressuriser le réservoir 101 à l'aide d'hélium ou d'un autre gaz de séchage ou de test. Dans le cas où une seule vanne 191 est mise en oeuvre, après avoir fait le vide et rempli le réservoir en ergol dans la position normale du réservoir, on procède à une pressurisation de ce réservoir à partir de la même vanne 191 par introduction du gaz, mais après avoir procédé à un retournement du réservoir pour que le liquide soit éloigné de la sortie 195.

Selon un autre mode de réalisation, représenté sur la figure 6, une deuxième vanne de remplissage/vidange est installée sur le bloc de distribution 160. Dans ce cas, la première vanne 191 raccordée à l'orifice 145 est réservée exclusivement au liquide tandis que la seconde vanne 192 raccordée à l'orifice 146 est reliée à travers le bloc de distribution 160 et une tuyauterie 193 interne au réservoir 101, à l'extrémité supérieure 194 du réservoir 101. Dans ce cas, la procédure de remplissage et pressurisation n'implique aucun retournement du réservoir.

Un capteur de pression 181 (figure 1) est installé sur le bloc de distribution 160 pour contrôler au sol les opérations de nettoyage et de pressurisation et procéder aux tests d'étanchéité et de pression d'épreuve. En vol, le capteur de pression 181 peut servir à contrôler l'évolution de la pression et par suite la quantité d'ergol restant.

On notera que l'invention, qui se caractérise en particulier par la mise en oeuvre d'un bloc de distribution 160 solidaire d'un fond renforcé 104 du réservoir 101, peut être appliquée à des réservoirs de types très divers, par exemple à membrane ou à vessie, munis ou non de moyens de pressurisation qui peuvent être ou non intégrés au réservoir. La forme et la taille du réservoir peuvent également être adaptées aux besoins et différer de la forme sphérique ou cylindro-sphérique représentée sur les dessins.

Les figures 1, 3 et 4 montrent un premier exemple d'agencement de propulseurs sur le bloc de distribution 160.

Selon l'invention, un ensemble d'au moins deux propulseurs de poussée comprise entre environ 0,2 et 5 N, sont montés sur le bloc de distribution, en étant orientés sensiblement selon l'axe du réservoir qui correspond lui-même à l'axe du satellite 2. Les propulseurs sont alimentés directement à partir du bloc de distribution par des canaux internes à celui-ci, comme indiqué précédemment en référence aux figures 5 et 6, sans tuyauterie externe supplémentaire. Les propulseurs sont disposés symétriquement par rapport à l'axe du réservoir.

Sur les figures 1, 3 et 4, on voit un ensemble 110 de quatre propulseurs 111 à 114 disposés en croix symétriquement par rapport à l'axe du réservoir.

Chaque propulseur 111 à 114 comprend de façon classique un moteur proprement dit constitué par un injecteur d'ergol, une chambre de combustion équipée d'un catalyseur et une tuyère. Ce moteur 111 à 114 est lui-même relié par des brides 121 à 124 à un corps de vanne 131 à 134 qui comprend avantageusement un ensemble de deux vannes connectées en série pour assurer la sécurité et la redondance requises. Le corps de vanne 131 à 134 est lui-même relié directement au bloc de distribution 160, sans tuyauterie supplémentaire.

Dans le mode de réalisation des figures 1, 3 et 4, les propulseurs 111 à 114 sont coudés à 90°. De façon préférentielle, mais non limitative, le coude est réalisé au niveau du tube capillaire constituant l'injecteur d'ergot dont une première partie est alignée horizontalement avec un corps de vanne rattaché radialement au bloc de distribution 160, et une deuxième partie est orientée vers le bas, pour l'essentiel parallèlement à l'axe du réservoir 101, la chambre de combustion et la tuyère étant elles-mêmes dans le prolongement de cette deuxième partie de l'injecteur. De cette manière, la hauteur globale du système propulsif et la hauteur sous la bride de fixation 103 du système propulsif peuvent être réduites. L'ensemble du bloc de distribution 160 et des propulseurs 110 présente une dimension transversale inférieure au diamètre du réservoir 101.

Le système propulsif selon l'invention est monolithique, compact, indépendant et entièrement assemblé avant intégration sur la plate-forme 21 du satellite 2, avec laquelle il est relié par une seule interface constituée des moyens de liaison 103.

Le nombre de propulseurs 111 à 114 peut varier par exemple entre 2 et 8. La forme du bloc de distribution 160 peut être adaptée au nombre de propulseurs. Selon les applications, la position et l'entraxe des propulseurs peuvent varier. Ainsi, dans certains cas, il peut être souhaitable d'avoir une répartition dissymétrique par rapport à l'axe du réservoir.

Dans l'exemple des figures 1, 3 et 4, on a représenté un bloc de distribution 160 à deux étages superposés. Ainsi, une partie supérieure 161 de forme essentiellement cubique, mais dont les arêtes sont chanfreinées, présente quatre faces latérales sur chacune desquelles est rapporté un ensemble constitué par un propulseur 111 à 114 et sa double vanne associée 131 à 134. Une partie inférieure 162 du bloc de distribution présente une forme cubique ou hexagonale avec au moins deux faces latérales principales avantageusement décalées de 45° par rapport aux faces latérales de la partie supérieure 161, et sur lesquelles sont montées une vanne 191 de remplissage/vidange et un capteur de pression 181. L'accessibilité de tous les éléments du système propulsif est alors optimisée et la masse de l'ensemble du bloc de distribution 160 peut être aussi réduite que possible.

Dans le cas où l'on utilise deux vannes 191, 192, la partie inférieure 162 du bloc de distribution peut être de forme cubique avec un décalage de 45° par rapport à la partie supérieure 161 et les vannes peuvent par exemple être disposées sur deux faces de la partie inférieure 162 tandis que le capteur de pression est disposé sur une troisième face principale de cette partie inférieure 162.

On notera que le bloc de distribution 160 pourrait à titre de variante ne comporter qu'un seul étage et présenter une forme octogonale pour permettre d'installer au même niveau à la fois quatre propulseurs et des équipements annexes constitués par des vannes ou capteurs. Cette réalisation ne permettrait cependant pas d'obtenir pour les propulseurs un entraxe aussi réduit que dans le mode de réalisation des figures 1, 3 et 4. Si l'ensemble propulsif ne comporte que deux propulseurs, par exemple les propulseurs 111 et 112, alors une vanne 191 et un capteur de pression 181 peuvent facilement être disposés au même niveau que les propulseurs 111 et 112, sur les faces de la partie cubique 161 du bloc de distribution 160 occupées par les propulseurs 113 et 114 dans le mode de réalisation à quatre propulseurs précédemment décrit Dans un mode de réalisation à deux propulseurs, la deuxième partie 162 du bloc de distribution 160 peut alors être omise pour réduire la masse.

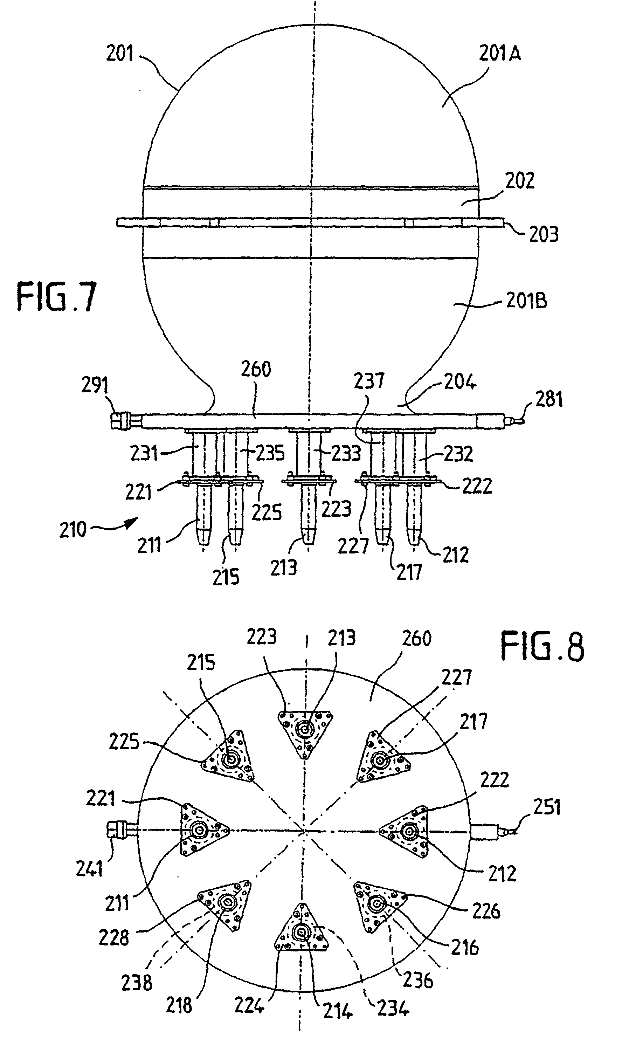

Les figures 7 et 8 présentent un autre mode de réalisation de l'invention, dans lequel le réservoir 201 composé des parties hémisphériques 201A, 201B et de la virole 202 munie de moyens d'accrochage 203 sur la plate-forme d'un satellite, peut être semblable au réservoir 101 précédemment décrit. Dans le cas des figures 7 et 8, le fond renforcé 204 du réservoir présente cependant une surface plus importante pour recevoir un bloc de distribution 260 en forme de plaque-support ou plateau à un seul étage, par exemple en forme de disque, dont le diamètre extérieur peut être égal ou légèrement inférieur au diamètre du réservoir 201.

Dans le mode de réalisation des figures 7 et 8, l'ensemble 210 des propulseurs 211 à 218 est rapporté sur la face inférieure de la plaque du bloc de distribution 260. Les propulseurs 211 à 218, au nombre de huit dans l'exemple considéré, sont répartis régulièrement sur un cercle centré sur l'axe du réservoir, mais d'autres configurations ou répartitions sont possibles.

Les propulseurs 211 à 218 sont constitués chacun par un moteur proprement dit rectiligne composé d'un injecteur, d'une chambre de combustion à catalyseur et d'une tuyère, le moteur proprement dit étant relié par une bride 221 à 228 à un corps de vanne 231 à 238 abritant deux vannes en série et rattaché à la face inférieure de la plaque-support du bloc de distribution 260 à l'intérieur de laquelle sont formés les canaux d'alimentation des vannes 231 à 238 à partir de la sortie du réservoir 201, qui peut être équipée d'un filtre comme dans les modes de réalisation déjà décrits. Dans le mode de réalisation des figures 7 et 8, les propulseurs 211 à 218 sont alignés avec les corps de vanne correspondants 231 à 238 dirigés vers le bas sensiblement parallèlement à l'axe du réservoir 201.

Un capteur de pression 281 et une vanne de remplissage/vidange 291 (ou le cas échéant deux vannes de remplissage/vidange) assurent les fonctions décrites précédemment en référence aux modes de réalisation des figures 1 à 6, et peuvent être disposés par exemple radialement en étant rapportés sur la tranche de la plaque-support du bloc de distribution 260.

Le mode de réalisation des figures 7 et 8 offre une commodité d'assemblage à la fois de l'ensemble 210 des propulseurs et des équipements annexes sur le bloc de distribution 260, et de l'ensemble du système propulsif sur la plate-forme 21 d'un satellite 2 tel que celui de la figure 2.

Naturellement, diverses modifications et variantes peuvent être apportées aux modes de réalisation décrits. Ainsi, par exemple, dans le mode de réalisation des figures 7 et 8, les équipements annexes 281, 291 peuvent également être montés sur la face inférieure de la plaque-support 260 comme les propulseurs 211 à 218.

## Revendications

1. Système propulsif monolithique compact à monergol pour petit satellite (2),
**caractérisé en ce qu'**il comprend :
a) un réservoir (101 ; 201) d'ergol liquide équipé de moyens (103 ; 203) de fixation sur la plate-forme (21) du satellite (2), et comportant un fond (104 ; 204) renforcé,
b) un bloc de distribution (160 ; 260) soudé sur le fond renforcé (104; 204) du réservoir (101 ; 201) qui incorpore un élément filtrant (106),
c) au moins une vanne (191 ; 291) de remplissage/vidange montée sur le bloc de distribution (160 ; 260), et
d) un ensemble d'au moins deux propulseurs (111 à 114 ; 211 à 218) montés sur le bloc de distribution (160 ; 260), orientés sensiblement selon l'axe du réservoir (101 ; 201) correspondant lui-même à l'axe du satellite (2) et alimentés directement à partir du bloc de distribution (160 ; 260) sans tuyauterie supplémentaire.

2. Système propulsif selon la revendication 1, **caractérisé en ce qu'**il comprend une vanne unique (191) servant à remplir et vidanger le réservoir (101 ; 201) en ergol ou fluide de nettoyage, de test ou de pressurisation.

3. Système propulsif selon la revendication 1, **caractérisé en ce qu'**il comprend une première vanne (191) de remplissage/vidange montée sur le bloc de distribution (160) et servant à remplir et vidanger le réservoir (101) en ergol et une deuxième vanne (192) de remplissage/vidange montée sur le bloc de distribution (160) et servant à remplir et vidanger le réservoir (101) en gaz, la deuxième vanne (192) de remplissage/vidange étant reliée à travers le bloc de distribution (160) à une tuyauterie (193) interne au réservoir (101) et remontant jusqu'à l'extrémité (194) du réservoir opposée à la sortie (195) voisine du bloc de distribution (160).

4. Système propulsif selon l'une quelconque des revendications 1 à 3, **caractérisé en ce que** chaque propulseur (111 à 114 ; 211 à 218) comprend un ensemble moteur fixé par une bride (121 à 124 ; 221 à 228) à un corps de vanne (131 à 134 ; 231 à 238) lui-même fixé sur le bloc de distribution (160 ; 260).

5. Système propulsif selon l'une quelconque des revendications 1 à 4, **caractérisé en ce qu'**il comprend quatre propulseurs (111 à 114) disposés en croix symétriquement par rapport à l'axe du réservoir (101).

6. Système propulsif selon l'une quelconque des revendications 1 à 5, **caractérisé en ce que** le bloc de distribution (160) comprend une première partie (161) fixée au fond (104) du réservoir (101) pour recevoir les propulseurs (111 à 114) et une deuxième partie (162) située sous la première partie (161) pour recevoir des équipements annexes tels qu'une vanne de remplissage/vidange (191) ou un capteur de pression (181).

7. Système propulsif selon l'une quelconque des revendications 1 à 6, **caractérisé en ce que** les propulseurs (111 à 114) sont coudés à 90°.

8. Système propulsif selon l'une quelconque des revendications 1 à 4, **caractérisé en ce que** le bloc de distribution (260) comprend une plaque support à la partie inférieure de laquelle sont montés les propulseurs (211 à 218).

9. Système propulsif selon la revendication 8, **caractérisé en ce que** des équipements annexes tels qu'une vanne de remplissage/vidange (291) ou un capteur de pression (281) sont disposés radialement à la périphérie de la plaque support du bloc de distribution (260).

10. Système propulsif selon la revendication 8, **caractérisé en ce que** des équipements annexes tels qu'une vanne de remplissage/vidange (291) ou un capteur de pression (281) sont montés sur la face inférieure de la plaque-support du bloc de distribution (260).

## Patentansprüche

1. Monolithisches, kompaktes Monergol-Antriebssystem für einen Kleinsatelliten (2),
dadurch gekennzeichet, dass das System aufweist:
a) ein Flüssigergol-Reservoir (101; 201), ausgestattet mit Mitteln (103; 303) zum Fixieren an dem Unterbau (21) des Satelliten (2), und ausgerüstet mit einem verstärkten Boden (104; 204),
b) einen Verteilerblock (160; 260), der an dem verstärkten Boden (104; 204) des Reservoirs (101; 201), welcher ein Filterelement (106) enthält, angeschweißt ist;
c) mindestens ein Füll-/Entleerungs-Ventil (191; 291), das an dem Verteilerblock (160; 260) gelagert ist, und
d) eine Anordnung aus mindestens zwei Triebwerken (111-114; 212-218), die an dem Verteilerblock (160; 260) angebracht sind, die etwa in Richtung der Achse des Reservoirs (101; 201) orientiert sind, wobei die Achse ihrerseits der Achse des Satelliten (2) entspricht, und die direkt von dem Verteilerblock (160; 260) ohne Zusatz-Leitungssystem gespeist werden.

2. System nach Anspruch 1,
**dadurch gekennzeichnet, dass** es ein einziges Ventil (191) aufweist, das zum Füllen und Entleeren des Reservoirs (101; 201) mit Ergol oder mit Reinigungs-, Test- oder Druckfluid dient.

3. System nach Anspruch 1,
**dadurch gekennzeichnet, dass** es ein erstes Füll-/Entleerungs-Ventil (191) aufweist, das an dem Verteilerblock (160) gelagert ist und dazu dient, das Reservoir (101) mit Ergol aufzufüllen und zu entleeren, und ein zweites Füll-/Entleerungs-Ventil (192) aufweist, das an dem Verteilerblock (160) gelagert ist und zum Füllen und Entleeren des Reservoirs (101) mit Gas dient, wobei das zweite Füll-/Entleerungs-Ventil (192) über den Verteilerblock (160) mit einer internen Leitungsanordnung (193) des Reservoirs (102) verbunden ist und sich bis zu dem Ende (194) des Reservoirs erstreckt, welches dem dem Verteilerblock (160) benachbarten Ausgang (195) abgewandt ist.

4. System nach einem der Ansprüche 1 bis 3,
**dadurch gekennzeichnet, dass** jedes Triebwerk (111-114; 211-218) eine Antriebsanordnung aufweist, die mittels eines Flansches (121-124; 221-228) an einem Gehäuse des Ventils (131-134; 231-238) befestigt ist, das seinerseits an dem Verteilerblock (160; 260) befestigt ist.

5. System nach einem der Ansprüche 1 bis 4,
**dadurch gekennzeichnet, dass** es vier Triebwerke (111-114) aufweist, die als Kreuz symmetrisch bezüglich der Achse des Reservoirs (101) angeordnet sind.

6. System nach einem der Ansprüche 1 bis 5,
**dadurch gekennzeichnet, dass** der Verteilerblock (160) einen ersten Teil (161) aufweist, der an dem Boden (104) des Reservoirs (101) befestigt ist, um die Triebwerke (111-114) aufzunehmen, und einen zweiten Teil (162) aufweist, der unter dem ersten Teil (161) gelegen ist, um Zusatzarmaturen aufzunehmen, beispielsweise ein Füll-/Entleerungs-Ventil (191) oder einen Druckaufnehmer (181).

7. System nach einem der Ansprüche 1 bis 6,
**dadurch gekennzeichnet, dass** die Triebwerke (111-114) um 90° gebogen sind.

8. System nach einem der Ansprüche 1 bis 4,
**dadurch gekennzeichnet, dass** der Verteilerblock (260) eine Lagerplatte aufweist, an deren unterem Teil die Triebwerke (211-218) gehaltert sind.

9. System nach Anspruch 8,
**dadurch gekennzeichnet, dass** die Zusatzarmaturen wie z.B. ein Füll-/Entleerungs-Ventil (291) oder ein Druckaufnehmer (281) radial am Umfang der Lagerplatte des Verteilerblocks (260) angeordnet sind.

10. System nach Anspruch 8,
**dadurch gekennzeichnet, dass** die Zusatzarmaturen wie z.B. ein Füll-/Entleerungs-Ventil (291) oder ein Druckaufnehmer (281) an der Unterseite der Lagerplatte des Verteilerblocks (260) gehaltert sind.

## Claims

1. A compact single-propellant unitary propulsion system for a small satellite (2),
**characterised in that** it comprises:
a) a liquid propellant tank (101; 201) fitted with means (103; 203) for fixing to the platform (21) of the satellite (2), and including a reinforced bottom wall (104; 204);
b) a distribution block (160; 260) welded to the reinforced bottom wall (104; 204) of the tank (101; 201) which includes a filter element (106);
c) at least one filling/emptying valve (191; 291) mounted on the distribution block (160; 260); and
d) a set of at least two thrusters (111 to 114; 211 to 218) mounted on the distribution block (160; 260), pointing substantially along the axis of the tank (101; 201), itself corresponding to the axis of the satellite (2) and fed directly from the distribution block (160; 260) without additional pipework.

2. A propulsion system according to claim 1, **characterised in that** it comprises a single valve (191) for filling and emptying the tank (101; 201) with propellant or with cleaning, test, or pressurization fluid.

3. A propulsion system according to claim 1, **characterised in that** it comprises a first filling/emptying valve (191) mounted on the distribution block (160) and serving to fill and empty the tank (101) with propellant, and a second filling/emptying valve (192) mounted on the distribution block (160) and serving to fill and empty the tank (101) with gas, the second filling/emptying valve (192) being connected via the distribution block (160) to pipework (193) inside the tank (101) and extending to the end (194) of the tank remote from the outlet (195) adjacent the distribution block (160).

4. A propulsion system according to any one of claims 1 to 3, **characterised in that** each thruster (111 to 114; 211 to 218) comprises a motor assembly fixed via a flange (121 to 124; 221 to 228) to a valve body (131 to 134; 231 to 238) itself fixed on the distribution block (160; 260).

5. A propulsion system according to any one of claims 1 to 4, **characterised in that** it comprises four thrusters (111 to 114) disposed in a cross-configuration symmetrically about the axis of the tank (101).

6. A propulsion system according to any one of claims 1 to 5, **characterised in that** the distribution block (160) comprises a first portion (161) fixed to the bottom wall (104) of the tank (101) to receive the thrusters (111 to 114), and a second portion (162) situated beneath the first portion (161) to receive auxiliary equipment such as a filling/emptying valve (191) or a pressure sensor (181).

7. A propulsion system according to any one of claims 1 to 6, **characterised in that** the thrusters (111 to 114) are bent through 90°.

8. A propulsion system according to any one of claims 1 to 4, **characterised in that** the distribution block (260) comprises a support plate having the thrusters (211 to 218) mounted on the bottom portion thereof.

9. A propulsion system according to claim 8, **characterised in that** auxiliary equipment such as a filling/emptying valve (291) or a pressure sensor (281) is disposed radially at the periphery of the support plate of the distribution block (260).

10. A propulsion system according to claim 8, **characterised in that** auxiliary equipment such as a filling/emptying valve (291) or a pressure sensor (281) is mounted on the bottom face of the support plate of the distribution block (260).
